# EUROPÄISCHE PATENTANMELDUNG

(11) **EP 3 954 495 A1**
(43) Veröffentlichungstag der Anmeldung: **16.02.2022**
(21) Anmeldenummer: 21189456.3
(22) Anmeldetag: 03.08.2021
(51) Int. Cl.: B23K 37/04, B23K 37/047, B23Q 1/48, B23Q 7/00, B23Q 7/04, B25J 9/00, B66C 23/02

(54) **HALTE- UND/ODER HANDHABUNGSVORRICHTUNG FÜR SCHWERE WERKSTÜCKE**

(30) Priorität: 14.08.2020 DE 102020210393
(71) Anmelder: Hieber GmbH, 93092 Barbing (DE)
(72) Erfinder: SANDER, Christian, 93092 Barbing (DE)
(74) Vertreter: Benninger, Johannes

(57) **Zusammenfassung**

Es ist eine Halte- und/oder Handhabungsvorrichtung (2) für schwere Werkstücke (4), insbesondere für oder im Zusammenhang mit Schweiß- und/oder Montagevorgänge(n), vorgesehen, offenbart, welche eine aufrecht angeordnete Hubsäule (6), an welcher ein in vertikaler Richtung verfahrbarer sowie um eine in etwa horizontale Drehachse verdrehbarer Tragarm (8) vorgesehen ist, umfasst. Der Tragarm (8) weist an einem äußeren Ende eine Spannvorrichtung (12) zur Aufnahme des Werkstücks (4) auf. Die Spannvorrichtung (12) umfasst zur Aufnahme des Werkstücks (4) einen zentrisch, insbesondere um 360° drehbaren Drehteller (14), an welchem das Werkstück (4) fixierbar ist. Weiterhin weist die Halte- und/oder Handhabungsvorrichtung (2) eine Hebevorrichtung (16) auf, welche am oberen Ende der Hubsäule (6) oberhalb des Tragarms vorgesehen ist. Die Hebevorrichtung (16) umfasst einen Ausleger (18), welcher an der Hubsäule (6) um eine in etwa vertikale und/oder die Hubsäule (6) verlängernde Schwenkachse (20) insbesondere um zumindest 180° schwenkbar befestigt ist. Der Ausleger (18) weist ein entlang des Auslegers (18) verfahrbares Anbindungsmittel (22) zur kurzfristigen Anbindung und vertikalen Bewegung des Werkstücks (4) auf.

## Beschreibung

Die vorliegende Erfindung betrifft eine Halte- und/oder Handhabungsvorrichtung für schwere Werkstücke, insbesondere für oder im Zusammenhang mit Schweiß- und/oder Montagevorgänge(n), gemäß den Merkmalen des Oberbegriffes des Anspruches 1.

Für oder im Zusammenhang mit Schweiß- und/oder Montagevorgänge(n) werden in vielen Fällen Vorrichtungen verwendet, mittels welchen an diesen aufgenommene schwere Werkstücke angehoben und/oder gedreht werden können, um eine bevorzugte Stellung des Werkstücks für beispielsweise Schweiß- und/oder Montagevorgänge zu erreichen.

Eine ähnliche Vorrichtung ist beispielsweise in der DE 24 13 024 B2 beschrieben. Hierbei ist zwischen zwei vertikalen U-förmigen Führungen mittels Laufrollen eine Traverse geführt, an der ein horizontaler Tragarm um seine Längsachse drehbar gelagert ist. Der Tragarm erstreckt sich durch einen auf der anderen Seite der Traverse befindlichen Gegengewichtsarm, wobei ein Zahnrad drehfest an dem sich durch den Gegengewichtsarm erstreckenden Ende des Tragarmes befestigt ist, das mittels eines von einem Elektromotor betriebenen Schneckengetriebe antreibbar ist. Am Gegengewichtsarm ist ein Aufspanntisch um eine zu einer Tischfläche zentrische und senkrecht stehende Achse drehbar. An einem Glied der Traverse greift eine am Boden abgestützte Teleskoppresse an, mittels welcher der Tragarm und der Gegengewichtarm parallel zu sich selbst anhebbar sind.

Eine weitere Vorrichtung ist aus der DE3407780 A1 bekannt. Die Spann- und Wendevorrichtung umfasst ein Gestell, welches sich mit einem plattenförmigen Fuß auf dem Bogen abstützt und mit einem kastenartig aufragenden Gestellgehäuse einen vorwiegend horizontal über dem Fuß vorgestreckten Träger einseitig aber unbeschränkt um eine horizontale Trägerachse drehbar lagert. Zwischen Träger und Gestell ist ein großes, fast die ganze Stirnseite des Gestellgehäuses zum Träger hin einnehmendes Ringlager für eine präzise und hochbelastbare Abstützung des Trägers vorgesehen und weiterhin darunter ein großer Zahnkranz.

Hierbei sind die Bewegungsmöglichkeiten für in der Spann- und Wendevorrichtung eingespannte Werkstücke jedoch stark eingeschränkt.

In vielen Fällen können Werkstücke aus Metall bestehen und mehrere hundert Kilogramm, oder oftmals auch bis zu einer Tonne oder mehr an Gewicht aufweisen. Um derartige Werkstücke auf eine Halte- und/oder Handhabungsvorrichtung zu laden, ist ein Hubfahrzeug, wie beispielsweise ein Stapler notwendig. In vielen Fällen ist der Stapler an einer weit von der Halte- und/oder Handhabungsvorrichtung entfernten Position positioniert, bereits im Einsatz oder ggf. auch defekt, sodass oftmals eine gewisse Zeitspanne verstreicht, bis das Hubfahrzeug einsatzbereit ist und das Werkstück an der Halte- und/oder Handhabungsvorrichtung positioniert werden kann. Zudem wird für das Hubfahrzeug, neben einer Bedienperson für die Halte- und/oder Handhabungsvorrichtung, eventuell eine weitere Bedienperson benötigt.

Es ist daher Aufgabe der Erfindung, eine Halte- und/oder Handhabungsvorrichtung zur Verfügung zu stellen, mittels welcher die oben genannten Nachteile des Stands der Technik zumindest teilweise umgangen werden können. Es soll eine Halte- und/oder Handhabungsvorrichtung bereit gestellt werden, mittels welcher schwere Werkstücke, insbesondere für oder im Zusammenhang mit Schweiß- und/oder Montagevorgänge(n), einfach und kurzfristig aufgenommen und an einer Bearbeitungsposition in Verbindung mit der Halte- und/oder Handhabungsvorrichtung platziert werden können.

Die obige Aufgabe wird durch eine Halte- und/oder Handhabungsvorrichtung gelöst, welche die Merkmale in des Anspruchs 1 umfasst. Weitere vorteilhafte Ausgestaltungen werden durch die Unteransprüche beschrieben.

So ist eine Halte- und/oder Handhabungsvorrichtung für schwere Werkstücke, insbesondere für oder im Zusammenhang mit Schweiß- und/oder Montagevorgänge(n), vorgesehen, welche eine aufrecht angeordnete Hubsäule, an welcher ein in vertikaler Richtung verfahrbarer sowie um eine in etwa horizontale Drehachse verdrehbarer Tragarm vorgesehen ist, umfasst. Der Tragarm weist an einem äußeren Ende eine Spannvorrichtung zur Aufnahme des Werkstücks auf. Bevorzugt ist der Tragarm um die in etwa horizontale Drehachse um 360° verdrehbar, insbesondere um 360° endlos verdrehbar. Sofern eine derartige Drehbarkeit für den vorgesehenen Einsatzzweck nicht unbedingt notwendig ist, kann es durchaus auch denkbar sein, eine Drehbarkeit des Tragarms mit einem geringeren Drehwinkel auszubilden.

Die Spannvorrichtung umfasst zur Aufnahme des Werkstücks einen zentrisch, insbesondere um 360° drehbaren Drehteller, an welchem das Werkstück fixierbar ist. Die Drehachse des Drehtellers kann in Grundstellung in vertikaler Richtung, vorzugsweise in etwa parallel zur Hubsäule ausgebildet sein. Bevorzugt ist der Drehteller der Spannvorrichtung um 360° endlos drehbar. Sofern eine derartige Drehbarkeit für den vorgesehenen Einsatzzweck nicht unbedingt notwendig ist, kann es auch denkbar sein, eine Drehbarkeit des Drehtellers mit einem geringeren Drehwinkel auszubilden. Üblicherweise ist die Spannvorrichtung nicht verfahrbar entlang des Tragarms ausgebildet, in manchen Ausgestaltungsformen der Halte- und/oder Handhabungsvorrichtung ist dies jedoch durchaus denkbar.

Zudem weist die Halte- und/oder Handhabungsvorrichtung eine Hebevorrichtung auf, welche am oberen Ende der Hubsäule oberhalb des Tragarms vorgesehen ist. Die Hebevorrichtung umfasst einen Ausleger, welcher an der Hubsäule um eine in etwa vertikale und/oder die Hubsäule verlängernde Schwenkachse zumindest um 180° schwenkbar befestigt ist. In Grundstellung der Halte- und/oder Handhabungsvorrichtung kann sich der Ausleger in Mittelstellung befinden, sodass sich eine Verschwenkbarkeit des Auslegers um jeweils zumindest 90° in beide Schwenkrichtungen ergeben kann. In manchen Fällen hat es sich zudem als nützlich erwiesen, eine größere Schwenkachse bereit zu stellen, um mehr Bewegungsspielraum für die Hebevorrichtung zu erhalten. grundsätzlich kann es auch möglich sein, eine Schwenkbegrenzung einzusetzen, welche eine Verschwenkung des Auslegers beispielsweise auf 15°, 30° oder dergleichen begrenzt.

Erfindungsgemäß weist der Ausleger ein entlang des Auslegers verfahrbares Anbindungsmittel zur kurzfristigen Anbindung und vertikalen Bewegung des Werkstücks auf. Bei dem Anbindungsmittel kann es sich vorzugsweise um einen Flaschenzug handeln.

Das Anbindungsmittel bzw. der Flaschenzug kann derartig ausgestaltet sein, um ein Werkstück von einem nahegelegenen Lagerplatz, beispielsweise einer sich in der unmittelbaren Nähe zu der Halte- und/oder Handhabungsvorrichtung befindenden Palette, aufzunehmen und an bzw. auf der Spannvorrichtung zu platzieren. Nach Abschluss von an dem Werkstück durchzuführenden Arbeiten, beispielsweise Schweiß- oder Montagearbeiten, kann das Anbindungsmittel wiederum dazu genutzt werden, um das Werkstück von der Spanneinrichtung zu entnehmen und an einen nahegelegenen Lagerplatz, wie einer Palette, abzulegen. Durch eine derartige Ausgestaltung der Halte- und/oder Handhabungsvorrichtung ist es nicht notwendig, zur Platzierung und/oder Positionierung von Werkstücken an der Spannvorrichtung bzw. zur Entnahme der Werkstücke von der Spannvorrichtung ein zusätzliches Hubfahrzeug, wie einen Stapler, zu nutzen. Die Handhabung des Werkstücks wird hierdurch erleichtert und ermöglicht einen flexibleren und zeitlich effizienteren Arbeitsablauf.

In einer bevorzugte Ausgestaltungsform der Halte- und/oder Handhabungsvorrichtung ist der Tragarm an einer Befestigungsvorrichtung angeordnet, welche in vertikaler Richtung entlang der Hubsäule verfahrbar ist, und an welcher der Tragarm um eine in etwa horizontale Drehachse drehbar befestigt ist. Insbesondere kann es vorgesehen sein, dass der Tragarm mittels eines zentrisch, insbesondere um 360° drehbaren zweiten Drehtellers drehbar an der Befestigungsvorrichtung angeordnet und/oder befestigt ist. Auf diese Weise ist eine uneingeschränkte Drehbarkeit des Tragarms möglich. Bevorzugt ist der zweite Drehteller um 360° endlos drehbar. Sofern eine derartige Drehbarkeit für den vorgesehenen Einsatzzweck nicht unbedingt notwendig ist, kann es auch denkbar sein, eine Drehbarkeit des zweiten Drehtellers mit einem geringeren Drehwinkel auszubilden.

Weiterhin kann es sein, dass der Tragarm dezentral um die in etwa horizontale Drehachse drehbar an der Befestigungsvorrichtung angeordnet und/oder befestigt ist. Dies bietet den Vorteil sehr flexibler Positionierungsmöglichkeiten für den Tragarm.

An dem Drehteller der Spannvorrichtung können zur Aufnahme des Werkstücks Befestigungsmittel zur Befestigung von Werkstücken angeordnet sein. Auf diese Weise können die Befestigungsmittel mittels des Drehtellers gedreht werden. Bei den Befestigungsmitteln kann es sich beispielsweise um magnetische Befestigungsmittel, um Klemmvorrichtungen oder um durch Verschrauben befestigbare Vorrichtungen handeln. Da die Werkstücke mehrere hundert Kilogramm, oder auch bis zu einer Tonne oder mehr an Gewicht aufweisen können, ist eine sichere Fixierung der Werkstücke an der Spannvorrichtung unerlässlich. Grundsätzlich kann der Tragarm und/oder die Hebevorrichtung zur Anbindung und/oder zur Bewegung von Werkstücken von vorzugsweise bis zu 1t Gewicht, besser 2-3t Gewicht oder mehr, geeignet sein.

Zur Bedienung und/oder Steuerung und/oder Regelung der verfahrbaren und/oder drehbaren Elemente der Halte- und/oder Handhabungsvorrichtung kann weiterhin eine Fernsteuerung, vorzugsweise ausgestaltet durch eine Funkfernsteuerung, vorgesehen sein.

Mindestens ein Stellmotor zur Positionierung der verfahrbaren und/oder drehbaren Elemente der Halte- und/oder Handhabungsvorrichtung kann an einem Seitenbereich der Hubsäule vorgesehen sein. In bevorzugten Ausgestaltungsformen der Halte- und/oder Handhabungsvorrichtung kann der Tragarm beispielsweise mittels eines Hydraulikzylinders in vertikaler Richtung entlang der Hubsäule verfahren werden. Zur Auslösung einer Drehbewegung des Tragarms kann sich beispielsweise ein elektrisch angetriebener Motor eignen, ebenso zur Auslösung einer Drehbewegung des Drehtellers.

Weiterhin kann die Halte- und/oder Handhabungsvorrichtung eine Steuerungs- und/oder Regelungseinrichtung aufweisen, mittels welcher aufeinander folgende Schritte zur Positionierung der verfahrbaren und/oder drehbaren Elemente der Halte- und/oder Handhabungsvorrichtung hinterlegt werden können. Durch Eingabe eines vorgegebenen Befehls können die Schritte in vorgesehener Reihenfolge durch die Steuerungs- und/oder Regelungseinrichtung vorzugsweise automatisiert angefahren werden. Hierbei können unterschiedliche aufeinander folgende Schritte zur Positionierung der verfahrbaren und/oder drehbaren Elemente der Halte- und/oder Handhabungsvorrichtung für übereinstimmende und wiederkehrend zu bearbeitende Werkstücke in der Steuerungs- und/oder Regelungseinrichtung hinterlegt sein.

In beispielsweise einem Arbeitsspeicher der Steuerungs- und/oder Regelungseinrichtung kann ein derartiges Positionierungsprogramms der verfahrbaren und/oder drehbaren Elemente der Halte- und/oder Handhabungsvorrichtung hinterlegt werden. Das Positionierungsprogramm betrifft hierbei insbesondere die Positionierung des Tragarms, der Spannvorrichtung sowie der Hebevorrichtung mit dessen Anbindungsmittel im Raum. Die Befehle, in eine weitere Arbeitsposition zu wechseln, können beispielsweise über eine Eingabe oder einen Tastendruck auf einem Bedienfeld der Steuerungs- und/oder Regelungseinrichtung eingegeben werden. Auch kann sich beispielsweise eine Fernsteuerung zur Befehlseingabe eignen. Zudem könnten sich auch beispielsweise Fernbedienungen, Fußtaster, ein zusätzliches Bedienpult oder auch Drucktaster bzw. -schalter an der Steuerungs- und/oder Regelungseinrichtung afür die Befehlseingabe anbieten.

Ein derartiges Positionierungsprogramm kann beispielsweise auch für unterschiedliche, wiederholt zu bearbeitende Werkstücke in der Steuerungs- und/oder Regelungseinrichtung bzw. dessen Arbeitsspeicher hinterlegt werden, auf welches dann bei Bedarf zugegriffen werden kann. Durch eine derartige Vorgehensweise kann viel Zeit eingespart werden, welche beispielsweise für einzelne Einstellungs- oder Programmierungsarbeiten an der Halte- und/oder Handhabungsvorrichtung benötigt würde. Ebenso kann die Arbeitsbelastung der Bedienperson(en) reduziert werden.

Mittels einer derartigen beschriebenen Halte- und/oder Handhabungsvorrichtung können schwere Werkstücke, insbesondere für oder im Zusammenhang mit Schweiß- und/oder Montagevorgänge(n), einfach und kurzfristig aufgenommen und an einer Bearbeitungsposition in Verbindung mit der Halte- und/oder Handhabungsvorrichtung platziert werden. Zur Platzierung und/oder Positionierung von Werkstücken an der Spannvorrichtung bzw. zur Entnahme der Werkstücke von der Spannvorrichtung ist kein zusätzliches Hubfahrzeug, wie ein Stapler, notwendig. Somit werden lediglich eine Bedienperson bzw. die für die Schweiß- und/oder Montagevorgänge(n) notwendigen Bedienpersonen für einen Einsatz der erfindungsgemäßen Halte- und/oder Handhabungsvorrichtung benötigt.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie oben bereits angedeutet, die erfindungsgemäße Halte- und/oder Handhabungsvorrichtung Teil einer Werkstattausstattung oder einer Werkhallte o. dgl. sein.

Die erfindungsgemäße Halte- und/oder Handhabungsvorrichtung soll sich insbesondere für das Heben und Umsetzen schwerer Werkstücke eignen, so dass sie insbesondere im Zusammenhang mit Schweiß- und/oder Montagevorgängen eingesetzt werden kann. Die Halte- und oder Handhabungsvorrichtung weist vorzugsweise eine aufrecht angeordnete Hubsäule auf, welche an einer Bodenplatte befestigt sein kann. Die Bodenplatte wiederum kann bzw. muss beispielsweise fest an bzw. in einem Betonboden einer Werks- oder Fabrikhalle verankert werden.

Üblicherweise kann die Hubsäule eine sinnvolle Höhe von rund vier Metern aufweisen, je nach Einsatz- bzw. Anwendungsbereich ist eine höhere bzw. niedrigere Ausgestaltung der Hubsäule denkbar. An der Hubsäule befindet sich ein in vertikaler Richtung verfahrbarer sowie um eine in etwa horizontale Drehachse verdrehbarer Tragarm der beispielsweise eine freie Länge von rund eineinhalb Metern aufweisen kann. Jedoch ist auch hier eine vom Einsatz- bzw. Anwendungsbereich der Halte- und/oder Handhabungsvorrichtung abhängige längere oder kürzere Ausgestaltung des Tragarms möglich.

Der Tragarm ist vorzugswerise an einer an der Hubsäule verfahrbaren Befestigungsvorrichtung angebracht. An der Befestigungsvorrichtung kann, neben dem Tragarm, beispielsweise ein Stellmotor angebracht bzw. befestigt sein, mit Hilfe dessen der Tragarm via die Befestigungsvorrichtung in vertikaler Richtung entlang der Hubsäule nach oben oder unten verfahren werden kann. Um den Tragarm entlang der Hubsäule zu verfahren, kann sich insbesondere auch der Einsatz eines Hydraulikzylinders eignen.

Ebenso kann ein weiterer Stellmotor in Form beispielsweise eines elektrisch angetriebenen Motors an der Befestigungsvorrichtung vorgesehen sein, mittels welchem eine Drehbewegung des Tragarms ausgelöst werden kann. Der Stellmotor kann oder die Stellmotoren können bspw. an einem Seitenbereich der Hubsäule an der Befestigungsvorrichtung angeordnet sein. Für weitere Stellmotoren kann sich eine derartige Anordnung ebenfalls anbieten.

Hierbei können die Stellmotoren beispielsweise durch einen Überstand einer Platte der Befestigungsvorrichtung vor äußeren Einflüssen der Schweiß- und/oder Montagevorgänge geschützt werden. Zudem ergibt sich eine kompakte Anordnungsmöglichkeit für die Stellmotoren, welche dennoch einen unkomplizierten Zugriff auf die Stellmotoren beispielsweise für Wartungsarbeiten erlaubt.

An der dem Tragarm gegenüberliegenden Seite der Hubsäule kann sich Raum für eine Anordnung von beispielsweise Steuerungs- und/oder Regelungseinrichtungen sowie die Fortleitung beispielsweise elektrischer, pneumatischer und/oder hydraulischer Anschlüsse, z. B. für die Stellmotoren, anbieten.

Die Steuerungs- und/oder Regelungseinrichtungen können beispielsweise derartig ausgebildet sein bzw. derartige Mittel enthalten, welche eine Fernsteuerung, -bedienung und/oder -regelung der jeweiligen verfahrbaren und/oder drehbaren Elemente der Halte- und/oder Handhabungsvorrichtung erlauben. Insbesondere eignet sich hierbei beispielsweise eine Funkfernsteuerung.

Der Tragarm kann weiterhin an seinem äußeren Ende eine geeignete Spannvorrichtung zur Aufnahme von Werkstücken aufweisen. Die Spannvorrichtung kann zur Aufnahme des Werkstücks bspw. einen zentrisch, insbesondere um 360° drehbaren Drehteller aufweisen, an welchem das Werkstück fixierbar ist. Die Drehachse des Drehtellers ist in Grundstellung normalerweise in vertikaler Richtung, vorzugsweise in etwa parallel zur Hubsäule orientiert. Üblicherweise ist die Spannvorrichtung nicht verfahrbar entlang des Tragarms ausgebildet, in manchen Ausgestaltungsformen der Halte- und/oder Handhabungsvorrichtung ist dies jedoch durchaus denkbar.

Auch für die Auslösung einer Drehbewegung des Drehtellers kann sich beispielsweise ein elektrisch angetriebener Motor eignen. Bevorzugt ist der Drehteller der Spannvorrichtung um 360° endlos drehbar. Sofern eine derartige Drehbarkeit für den vorgesehenen Einsatzzweck nicht unbedingt notwendig ist, kann es auch denkbar sein, eine Drehbarkeit des Drehtellers mit einem geringeren Drehwinkel auszubilden.

Am oberen Ende der Hubsäule oberhalb des Tragarms ist normalerweise weiterhin eine Hebevorrichtung vorgesehen. Die Hebevorrichtung umfasst bspw. einen Ausleger, welcher an der Hubsäule um eine in etwa vertikale und/oder die Hubsäule verlängernde Schwenkachse zumindest um 180° schwenkbar befestigt ist.

In Grundstellung der Halte- und/oder Handhabungsvorrichtung kann sich der Ausleger in einer neutralen Stellung oder in einer Mittelstellung befinden, sodass sich eine Verschwenkbarkeit des Auslegers um jeweils zumindest 90° in beide Schwenkrichtungen ergeben kann.

In manchen Fällen hat es sich zudem als nützlich erwiesen, eine größere Schwenkachse bereit zu stellen, um mehr Bewegungsspielraum für die Hebevorrichtung zu erhalten. Gewöhnlich kann der Ausleger eine Länge von rund drei Metern aufweisen, jedoch ist auch hier eine von Einsatz- bzw. Anwendungsbereich der Halte- und/oder Handhabungsvorrichtung abhängige längere oder kürzere Ausgestaltung des Auslegers denkbar. Der Ausleger umfasst vorzugsweise ein entlang des Auslegers verfahrbares Anbindungsmittel zur kurzfristigen Anbindung und vertikalen Bewegung des Werkstücks. Bei dem Anbindungsmittel kann es sich beispielsweise um einen entlang des Auslegers verfahrbaren Flaschenzug handeln.

Wahlweise kann der Tragarm mittels eines zentrisch, insbesondere um 360° drehbaren zweiten Drehtellers um eine in etwa horizontale Drehachse drehbar an der Befestigungsvorrichtung angeordnet und/oder befestigt sein. Der Tragarm kann insbesondere dezentral um die Drehachse drehbar an der Befestigungsvorrichtung angeordnet und/oder befestigt sein.

Zur Befestigung bzw. Fixierung von Werkstücken an der Spannvorrichtung können Befestigungsmittel vorgesehen sein, welche durch den Drehteller gedreht werden können. Bei den Befestigungsmitteln kann es sich beispielsweise um magnetische Befestigungsmittel, um Klemmvorrichtungen oder auch um durch Verschrauben befestigbare Vorrichtungen handeln.

Das bereits erwähnte Anbindungsmittel bzw. der Flaschenzug kann/können derartig ausgestaltet sein, dass sie in der Lage sind, ein Werkstück von einem nahegelegenen Lagerplatz, beispielsweise einer sich in der unmittelbaren Nähe zu der Halte- und/oder Handhabungsvorrichtung befindenden Palette, aufzunehmen und auf der Spannvorrichtung zu platzieren. Nach Abschluss von an dem Werkstück durchzuführenden Arbeiten, beispielsweise Schweiß- oder Montagearbeiten, kann das Anbindungsmittel wiederum dazu genutzt werden, um das Werkstück von der Spanneinrichtung zu entnehmen und an einem nahegelegenen Lagerplatz, wie einer Palette, ablegen zu können.

Durch eine derartige Ausgestaltung der Halte- und/oder Handhabungsvorrichtung ist es nicht notwendig, zur Platzierung und/oder Positionierung von Werkstücken an der Spannvorrichtung bzw. zur Entnahme der Werkstücke von der Spannvorrichtung ein zusätzliches Hubfahrzeug, wie einen Stapler, oder einen Deckenkran zu nutzen. Die Handhabung des Werkstücks wird hierdurch erleichtert und ermöglicht einen flexibleren und zeitlich effizienteren Arbeitsablauf.

Grundsätzlich wäre eine Verschwenkbarkeit des Auslegers um 360° denkbar. Wahlweise kann der Ausleger auch um die in etwa vertikale und/oder die Hubsäule verlängernde Schwenkachse beispielswiese um 180° verschwenkt werden. Ausgehend von einer Grundstellung kann sich somit eine Verschwenkbarkeit des Auslegers um vorzugsweise zumindest je 90° in beide Schwenkrichtungen (nach rechts/links) ergeben. Für manche Ausgestaltungsformen der Halte- und/oder Handhabungsvorrichtung kann es sich als nützlich erweisen, eine Schwenkbegrenzung für einen bestimmten Schwenkwinkel des Auslegers einzurichten.

Auf diese Weise kann der Ausleger bzw. das Anbindungsmittel grundsätzlich eine große Fläche abdecken, sodass innerhalb dieses Bereichs Werkstücke für anschließende Schweiß- und/oder Montagevorgänge(n) gelagert, oder nach Schweiß- und/oder Montagevorgänge(n) abgelegt werden können, ohne hierzu externe Hilfsmittel nutzen zu müssen. Sofern es sich für den vorgesehenen Einsatzzweck der Halte- und/oder Handhabungsvorrichtung als nützlich erweist, ist durchaus auch eine Verschwenkbarkeit des Auslegers um beispielsweise 360° denkbar.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.
Fig. 1 zeigt eine erste perspektivische Ansicht einer Ausführungsvariante einer erfindungsgemäßen Halte- und/ oder Handhabungsvorrichtung.
Fig. 2 zeigt eine zweite perspektivische Ansicht einer Ausführungsvariante der erfindungsgemäßen Halte- und/ oder Handhabungsvorrichtung.
Fig. 3 zeigt eine Seitenansicht der Halte- und/oder Handhabungsvorrichtung.
Fig. 4 zeigt eine weitere Seitenansicht der Halte- und/oder Handhabungsvorrichtung.
Fig. 5 zeigt eine Draufsicht auf die Halte- und/oder Handhabungsvorrichtung.

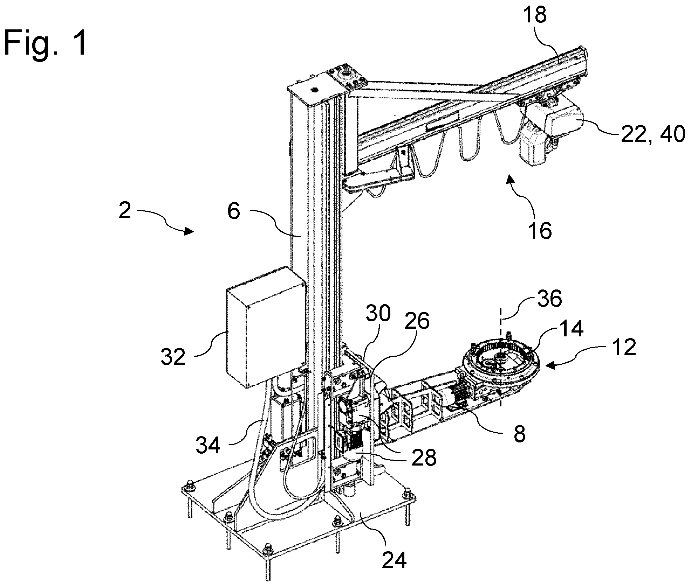

Die perspektivische Ansicht der Fig. 1 zeigt eine erfindungsgemäße Halte- und/oder Handhabungsvorrichtung 2 für schwere Werkstücke 4 in Grundstellung, welche insbesondere für oder im Zusammenhang mit Schweiß- und/oder Montagevorgänge(n) genutzt werden kann. Die Halte- und oder Handhabungsvorrichtung 2 weist eine aufrecht angeordnete Hubsäule 6 auf, welche an einer Bodenplatte 24 befestigt ist. Die Bodenplatte 24 wiederum kann bzw. muss beispielsweise fest an bzw. in einem Betonboden einer Werks- oder Fabrikhalle verankert werden.

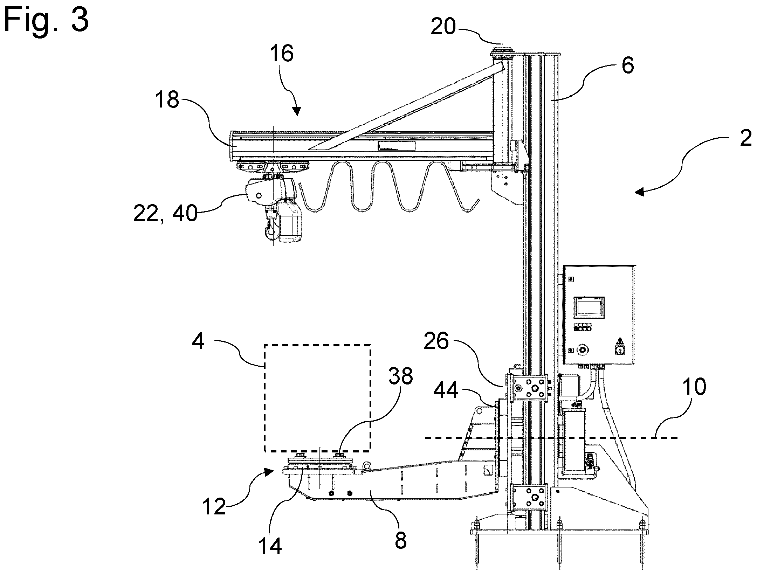

Üblicherweise kann die Hubsäule 6 eine Höhe von rund 4m aufweisen, je nach Einsatz- bzw. Anwendungsbereich ist eine höhere bzw. niedrigere Ausgestaltung der Hubsäule 6 denkbar. An der Hubsäule 6 ist ein in vertikaler Richtung verfahrbarer sowie um eine in etwa horizontale Drehachse 10 (vgl. Fig. 3) verdrehbarer Tragarm 8 vorgesehen.

Der Tragarm 8 kann beispielsweise mit einer Länge von rund 1,5m ausgestaltet sein, jedoch ist auch hier eine vom Einsatz- bzw. Anwendungsbereich der Halte- und/oder Handhabungsvorrichtung 2 abhängige längere oder kürzere Ausgestaltung des Tragarms 8 möglich.

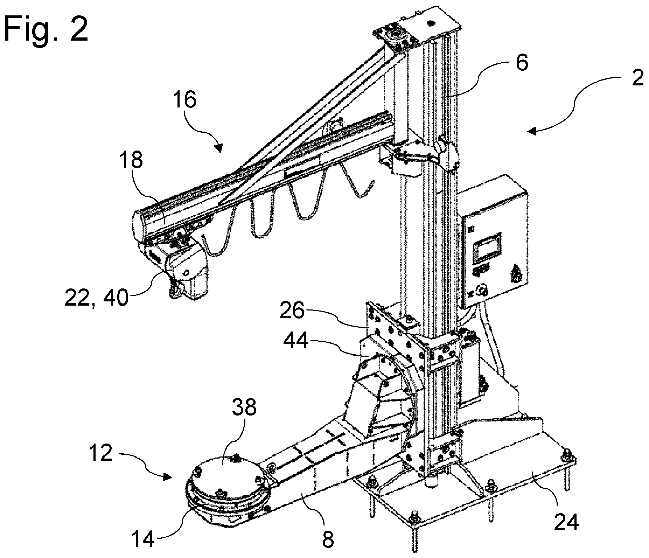

Der Tragarm 8 ist, wie insbesondere in den Fig. 2 und 3 zu erkennen, an einer an der Hubsäule 6 verfahrbaren Befestigungsvorrichtung 26 angebracht. An der Befestigungsvorrichtung 26 kann, neben dem Tragarm 8, beispielsweise ein Stellmotor 28 angebracht bzw. befestigt sein, mit Hilfe dessen der Tragarm 8 via die Befestigungsvorrichtung 26 in vertikaler Richtung entlang der Hubsäule 6 verfahren werden kann. Um den Tragarm 8 entlang der Hubsäule 6 zu verfahren kann sich insbesondere auch der Einsatz eines Hydraulikzylinders eignen.

Ebenso kann ein weiterer Stellmotor 28 in Form beispielsweise eines elektrisch angetriebenen Motors an der Befestigungsvorrichtung 26 vorgesehen sein, mittels welchem eine Drehbewegung des Tragarms 8 ausgelöst werden kann. Wie in Fig. 1 zu erkennen, sind die Stellmotoren 28 an einem Seitenbereich der Hubsäule 6 an der Befestigungsvorrichtung 26 angeordnet. Für weitere Stellmotoren kann sich eine derartige Anordnung ebenfalls anbieten.

Hierbei können die Stellmotoren 28 beispielsweise durch einen Überstand einer Platte 30 der Befestigungsvorrichtung 26 vor äußeren Einflüssen der Schweiß- und/oder Montagevorgänge geschützt werden. Zudem ergibt sich eine kompakte Anordnungsmöglichkeit für die Stellmotoren 28, welche dennoch einen unkomplizierten Zugriff auf die Stellmotoren 28 beispielsweise für Wartungsarbeiten erlaubt. An der dem Tragarm 8 gegenüberliegenden Seite der Hubsäule 6 kann sich Raum für eine Anordnung von beispielsweise Steuerungs- und/oder Regelungseinrichtungen 32 sowie die Fortleitung beispielsweise elektrischer, pneumatischer und/oder hydraulischer Anschlüsse 34, z. B. für die Stellmotoren 28, bieten.

Die Steuerungs- und/oder Regelungseinrichtungen können beispielsweise derartig ausgebildet sein bzw. derartige Mittel enthalten, welche eine Fernsteuerung, -bedienung und/oder -regelung der jeweiligen verfahrbaren und/oder drehbaren Elemente der Halte- und/oder Handhabungsvorrichtung 2 erlauben. Insbesondere eignet sich hierbei beispielsweise eine Funkfernsteuerung.

Der Tragarm 8 weist an seinem äußeren Ende eine Spannvorrichtung 12 zur Aufnahme von Werkstücken 4 auf (vgl. bspw. Fig. 3). Die Spannvorrichtung 12 umfasst zur Aufnahme des Werkstücks 4 einen zentrisch, insbesondere um 360° drehbaren Drehteller 14, an welchem das Werkstück 4 fixierbar ist. Die Drehachse 36 des Drehtellers 14 ist in Grundstellung in vertikaler Richtung, vorzugsweise in etwa parallel zur Hubsäule 6 ausgebildet. Üblicherweise ist die Spannvorrichtung 12 nicht verfahrbar entlang des Tragarms 8 ausgebildet, in manchen Ausgestaltungsformen der Halte- und/oder Handhabungsvorrichtung 2 ist dies jedoch durchaus denkbar.

Auch für die Auslösung einer Drehbewegung des Drehtellers 14 kann sich beispielsweise ein elektrisch angetriebener Motor eignen. Bevorzugt ist der Drehteller 14 der Spannvorrichtung 12 um 360° endlos drehbar. Sofern eine derartige Drehbarkeit für den vorgesehenen Einsatzzweck nicht unbedingt notwendig ist, kann es auch denkbar sein, eine Drehbarkeit des Drehtellers 14 mit einem geringeren Drehwinkel auszubilden.

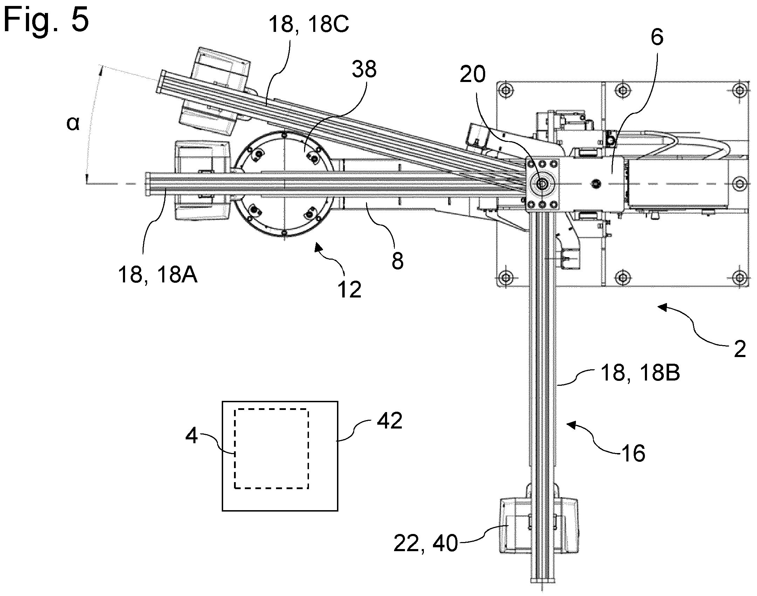

Am oberen Ende der Hubsäule 6 oberhalb des Tragarms 8 ist weiterhin eine Hebevorrichtung 16 vorgesehen. Die Hebevorrichtung 16 umfasst einen Ausleger 18, welcher an der Hubsäule 6 um eine in etwa vertikale und/oder die Hubsäule 6 verlängernde Schwenkachse 20 (vgl. Fig. 3, 5) zumindest um 180° schwenkbar befestigt ist. In Grundstellung der Halte- und/oder Handhabungsvorrichtung 2 kann sich der Ausleger 18 in Mittelstellung befinden, sodass sich eine Verschwenkbarkeit des Auslegers 18 um jeweils zumindest 90° in beide Schwenkrichtungen ergeben kann.

In manchen Fällen hat es sich zudem als nützlich erwiesen, eine größere Schwenkachse bereit zu stellen, um mehr Bewegungsspielraum für die Hebevorrichtung 16 zu erhalten. Gewöhnlich kann der Ausleger 18 eine Länge von rund 3m aufweisen, jedoch ist auch hier eine von Einsatz- bzw. Anwendungsbereich der Halte- und/oder Handhabungsvorrichtung 2 abhängige längere oder kürzere Ausgestaltung des Auslegers 18 denkbar. Der Ausleger 18 umfasst ein entlang des Auslegers 18 verfahrbares Anbindungsmittel 22 zur kurzfristigen Anbindung und vertikalen Bewegung des Werkstücks 4. Bei dem Anbindungsmittel 22 kann es sich beispielsweise um einen entlang des Auslegers 18 verfahrbaren Flaschenzug 40 handeln.

In Fig. 2 wird eine erfindungsgemäße Halte- und/oder Handhabungsvorrichtung 2 für schwere Werkstücke 4 aus einer weiteren perspektivischen Ansicht dargestellt. Wie die Vorrichtung 2 in Fig. 1 weist auch die in Fig. 2 gezeigte Vorrichtung 2 eine aufrecht angeordnete Hubsäule 6 auf, welche an einer Bodenplatte 24 befestigt ist. An der Hubsäule ist ebenfalls ein in vertikaler Richtung verfahrbarer sowie um eine in etwa horizontale Drehachse 10 (vgl. Fig. 3) verdrehbarer Tragarm 8 vorgesehen.

Der Tragarm 8 ist an einer an der Hubsäule 6 verfahrbaren Befestigungsvorrichtung 26 angebracht. Insbesondere ist nun die Anordnung bzw. Befestigung des Tragarms 8 an der Befestigungsvorrichtung 26 zu erkennen. In Fig. 2 ist erkennbar, dass der Tragarm 8 vorzugsweise mittels eines zentrisch, insbesondere um 360° drehbaren zweiten Drehteller 44 um die in etwa horizontale Drehachse 10 drehbar an der Befestigungsvorrichtung 26 angeordnet und/oder befestigt ist. In Zusammenschau mit Fig. 3 wird deutlich, dass der Tragarm 8 bevorzugt dezentral um die Drehachse 10 drehbar an der Befestigungsvorrichtung 26 angeordnet und/oder befestigt ist.

Weiterhin weist der Tragarm 8 an seinem äußeren Ende wiederum eine Spannvorrichtung 12 zur Aufnahme von Werkstücken 4 auf, welche einen zentrisch, insbesondere um 360°, vorzugsweise endlos, drehbaren Drehteller 14, umfasst. Zur Befestigung bzw. Fixierung von Werkstücken 4 an der Spannvorrichtung 12 können Befestigungsmittel 38 vorgesehen sein, welche durch den Drehteller 14 gedreht werden können. Bei den Befestigungsmitteln 38 kann es sich beispielsweise um magnetische Befestigungsmittel, um Klemmvorrichtungen oder auch um durch Verschrauben befestigbare Vorrichtungen handeln.

Am oberen Ende der Hubsäule 6 oberhalb des Tragarms 8 ist eine Hebevorrichtung 16 vorgesehen. Die Hebevorrichtung 16 umfasst den Ausleger 18, welcher an der Hubsäule 6 um eine in etwa vertikale und/oder die Hubsäule 6 verlängernde Schwenkachse 20 (vgl. Fig. 3, 5) schwenkbar befestigt ist. Der Ausleger 18 umfasst ein entlang des Auslegers 18 verfahrbares Anbindungsmittel 22 zur kurzfristigen Anbindung und vertikalen Bewegung des Werkstücks 4, wobei es sich bei dem Anbindungsmittel 22 um einen Flaschenzug 40 handeln kann.

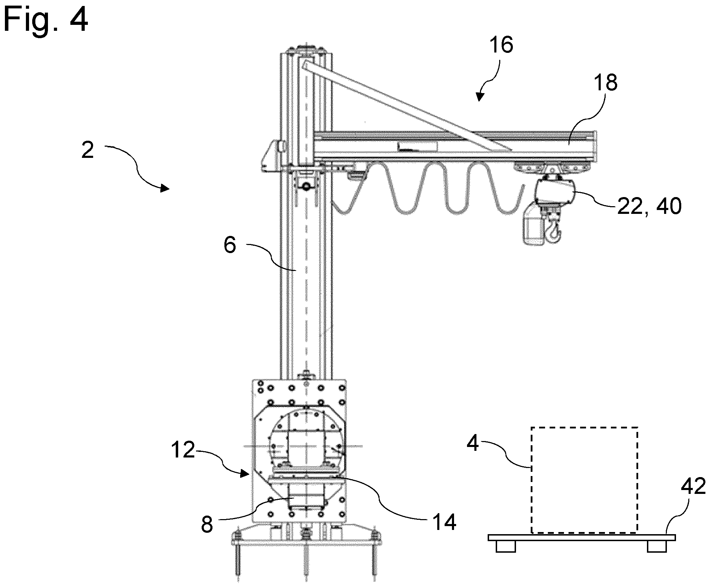

Das Anbindungsmittel 22 bzw. der Flaschenzug 40 ist derartig ausgestaltet, um ein Werkstück 4 von einem nahegelegenen Lagerplatz, beispielsweise einer sich in der unmittelbaren Nähe zu der Halte- und/oder Handhabungsvorrichtung 2 befindenden Palette 42 (Fig. 4, 5), aufzunehmen und auf der Spannvorrichtung 12 zu platzieren. Nach Abschluss von an dem Werkstück durchzuführenden Arbeiten, beispielsweise Schweiß- oder Montagearbeiten, kann das Anbindungsmittel 22 wiederum dazu genutzt werden, um das Werkstück von der Spanneinrichtung 12 zu entnehmen und an einem nahegelegenen Lagerplatz, wie einer Palette 42, ablegen zu können.

Durch eine derartige Ausgestaltung der Halte- und/oder Handhabungsvorrichtung 2 ist es nicht notwendig, zur Platzierung und/oder Positionierung von Werkstücken 4 an der Spannvorrichtung 12 bzw. zur Entnahme der Werkstücke 4 von der Spannvorrichtung 12 ein zusätzliches Hubfahrzeug, wie einen Stapler, oder einen Deckenkran zu nutzen. Die Handhabung des Werkstücks wird hierdurch erleichtert und ermöglicht einen flexibleren und zeitlich effizienteren Arbeitsablauf.

In den Figuren 3 und 4 ist weiterhin jeweils eine Seitenansicht einer erfindungsgemäßen Halte- und/oder Handhabungsvorrichtung 2 zu sehen, in der Fig. 5 eine Draufsicht. In den Figuren ist insbesondere der verschwenkte Ausleger 18 zu erkennen. Wie bereits angedeutet kann ein Werkstück 4 an einem nahegelegenen Lagerplatz z.B. auf einer Palette 42 vorbereitet sein. Durch die ausreichende Schwenkachse 20 des Auslegers 18 an der Hubsäule 6 kann das Werkstück 4 durch das Anbindungsmittel 22 kurzfristig angebunden werden, und auf bzw. an der Spannvorrichtung 12 positioniert und anschließend fixiert werden. Nach Abschluss von an dem Werkstück durchzuführenden beispielsweise Schweiß- oder Montagearbeiten kann das Werkstück 4 mit Hilfe des Anbindungsmittels 22 wiederum von der Spanneinrichtung 12 entnommen und z.B. auf eine Palette 42 am nahegelegenen Lagerplatz zurückgebracht werden.

Die Fig. 5 zeigt in Draufsicht die weitreichende Verschwenkbarkeit des Auslegers 18. Grundsätzlich wäre eine Verschwenkbarkeit des Auslegers um 360° denkbar. In diesem Ausführungsbeispiel kann der Ausleger 18 um die in etwa vertikale und/oder die Hubsäule 6 verlängernde Schwenkachse 20 beispielswiese um 180° verschwenkt werden. Der mit 18A gekennzeichnete Ausleger stellt den Ausleger 18 in seiner Grundstellung dar. Ausgehend von der Grundstellung kann sich somit eine Verschwenkbarkeit des Auslegers 18 um vorzugsweise zumindest je 90° in beide Schwenkrichtungen (nach rechts/links) ergeben.

Der mit 18B gekennzeichnete Ausleger stellt somit einen um 90° gegenüber der Grundstellung verschwenkten Ausleger 18 dar. Ausleger 18C wiederum ist lediglich um einen Winkel α um z.B. 15° gegenüber der Grundstellung verschwenkt. Für manche Ausgestaltungsformen der Halte- und/oder Handhabungsvorrichtung 2 hat es sich als nützlich erwiesen, eine Schwenkbegrenzung für einen bestimmten Schwenkwinkel des Auslegers 18 einzurichten, welcher hier beispielsweise durch den Winkel α angedeutet werden kann.

Somit kann der Ausleger 18 bzw. das Anbindungsmittel 22 grundsätzlich eine große Fläche abdecken, sodass innerhalb dieses Bereichs Werkstücke 4 für anschließende Schweiß- und/oder Montagevorgänge(n) gelagert, oder nach Schweiß- und/oder Montagevorgänge(n) abgelegt werden können, ohne hierzu externe Hilfsmittel nutzen zu müssen. Sofern es sich für den vorgesehenen Einsatzzweck der Halte- und/oder Handhabungsvorrichtung als nützlich erweist, ist durchaus auch eine Verschwenkbarkeit des Auslegers 18 um beispielsweise 360° denkbar.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 2: Halte- und/oder Handhabungsvorrichtung
- 4: Werkstück
- 6: Hubsäule
- 8: Tragarm
- 10: Drehachse
- 12: Spannvorrichtung
- 14: Drehteller
- 16: Hebevorrichtung
- 18: Ausleger
- 18A, 18B, 18C: Unterschiedliche Stellungen des Auslegers
- 20: Schwenkachse
- 22: Anbindungsmittel
- 24: Bodenplatte
- 26: Befestigungsvorrichtung
- 28: Stellmotor
- 30: Platte
- 32: Steuerungs- und/oder Regelungseinrichtungen
- 34: Anschlüsse
- 36: Drehachse
- 38: Befestigungsmittel
- 40: Flaschenzug
- 42: Palette
- 44: Zweiter Drehteller

## Patentansprüche

1. Halte- und/oder Handhabungsvorrichtung (2) für schwere Werkstücke (4), insbesondere für oder im Zusammenhang mit Schweiß- und/oder Montagevorgänge(n), umfassend zumindest:
- eine aufrecht angeordnete Hubsäule (6), an welcher ein in vertikaler Richtung verfahrbarer sowie um eine in etwa horizontale Drehachse (10) verdrehbarer Tragarm (8) vorgesehen ist,
- welcher Tragarm (8) an einem äußeren Ende eine Spannvorrichtung (12) zur Aufnahme des Werkstücks (6) aufweist,
- welche Spannvorrichtung (12) zur Aufnahme des Werkstücks (4) einen zentrisch, insbesondere um 360° drehbaren Drehteller (14) umfasst, an welchem das Werkstück (4) fixierbar ist,
- sowie eine Hebevorrichtung (16), welche am oberen Ende der Hubsäule (6) oberhalb des Tragarms (8) vorgesehen ist,
- welche Hebevorrichtung (16) einen Ausleger (18) umfasst, welcher an der Hubsäule (6) um eine in etwa vertikale und/oder die Hubsäule (6) verlängernde Schwenkachse (20) insbesondere um zumindest 180° schwenkbar befestigt ist, und
- welcher Ausleger (18) ein entlang des Auslegers (18) verfahrbares Anbindungsmittel (22) zur kurzfristigen Anbindung und vertikalen Bewegung des Werkstücks (4) umfasst.

2. Halte- und/oder Handhabungsvorrichtung (2) gemäß Anspruch 1, bei welcher der Tragarm (8) an einer Befestigungsvorrichtung (26) angeordnet ist, welche in vertikaler Richtung entlang der Hubsäule (6) verfahrbar ist, und an welcher der Tragarm (8) um eine in etwa horizontale Drehachse (10) drehbar befestigt ist.

3. Halte- und/oder Handhabungsvorrichtung (2) gemäß Anspruch 2, wobei der Tragarm (8) mittels eines zentrisch, insbesondere um 360° drehbaren zweiten Drehtellers (44) drehbar an der Befestigungsvorrichtung (26) angeordnet und/oder befestigt ist.

4. Halte- und/oder Handhabungsvorrichtung (2) gemäß Anspruch 2 oder 3, wobei der Tragarm (8) dezentral um die in etwa horizontale Drehachse (10) drehbar an der Befestigungsvorrichtung (26) angeordnet und/oder befestigt ist.

5. Halte- und/oder Handhabungsvorrichtung (2) gemäß einem der Ansprüche 2 bis 4, wobei an dem Drehteller (14) der Spannvorrichtung (12) zur Aufnahme des Werkstücks (4) Befestigungsmittel (38) zur Befestigung von Werkstücken (4) angeordnet sind.

6. Halte- und/oder Handhabungsvorrichtung (2) gemäß Anspruch 5, wobei es sich bei den Befestigungsmitteln (38) zur Befestigung von Werkstücken (4) um magnetische Befestigungsmittel, um Klemmvorrichtungen oder um durch Verschrauben befestigbare Vorrichtungen handelt.

7. Halte- und/oder Handhabungsvorrichtung (2) gemäß einem der Ansprüche 1 bis 6, wobei mindestens ein Stellmotor (28) zur Positionierung der verfahrbaren und/oder drehbaren Elemente der Halte- und/oder Handhabungsvorrichtung (2) an einem Seitenbereich der Hubsäule (6) vorgesehen ist.

8. Halte- und/oder Handhabungsvorrichtung (2) gemäß einem der Ansprüche 1 bis 7, wobei zur Bedienung und/oder Steuerung und/oder Regelung der verfahrbaren und/oder drehbaren Elemente der Halte- und/oder Handhabungsvorrichtung (2) eine Fernsteuerung, vorzugsweise ausgestaltet durch eine Funkfernsteuerung, vorgesehen ist.

9. Halte- und/oder Handhabungsvorrichtung (2) gemäß einem der Ansprüche 1 bis 8, wobei es sich bei dem Anbindungsmittel (22) um einen Flaschenzug (40) handelt.

10. Halte- und/oder Handhabungsvorrichtung (2) gemäß einem der Ansprüche 1 bis 9, wobei der Tragarm (8) und/oder die Hebevorrichtung (16) zur Anbindung und/oder zur Bewegung von Werkstücken von vorzugsweise bis zu 1t Gewicht, besser 2-3t Gewicht oder mehr, geeignet ist.

11. Halte- und/oder Handhabungsvorrichtung (2) gemäß einem der Ansprüche 1 bis 10, wobei eine Steuerungs- und/oder Regelungseinrichtung (32) vorgesehen ist, mittels welcher aufeinander folgende Schritte zur Positionierung der verfahrbaren und/oder drehbaren Elemente der Halte- und/oder Handhabungsvorrichtung (2) hinterlegt werden können, welche Schritte durch Eingabe eines vorgegebenen Befehls in vorgesehener Reihenfolge, vorzugsweise automatisiert, durch die Steuerungs- und/oder Regelungseinrichtung angefahren werden.

12. Halte- und/oder Handhabungsvorrichtung (2) gemäß Anspruch 11, wobei unterschiedliche aufeinander folgende Schritte zur Positionierung der verfahrbaren und/oder drehbaren Elemente der Halte- und/oder Handhabungsvorrichtung (2) für übereinstimmende und wiederkehrend zu bearbeitende Werkstücke (4) in der Steuerungs- und/oder Regelungseinrichtung (32) hinterlegt sind.

13. Halte- und/oder Handhabungsvorrichtung (2) gemäß Anspruch 11 oder 12, wobei Befehle mittels Eingabe auf einem Bedienfeld der Steuerungs- und/oder Regelungseinrichtung (32) und/oder mittels Fernsteuerung eingebbar sind.
